# EUROPEAN PATENT SPECIFICATION

(11) **EP 4 620 832 B1**
(45) Date of publication and mention of the grant of the patent: **02.12.2026**
(21) Application number: 24164687.6
(22) Date of filing: 19.03.2024
(51) Int. Cl.: B64D 47/02, B64D 47/04, B64D 47/06, B64D 45/00, F21W 107/30

(54) **EXTERIOR AIRCRAFT LIGHT, AIRCRAFT COMPRISING THE SAME, AND METHOD FOR CHECKING THE OPERATION OF AN EXTERIOR AIRCRAFT LIGHT**
FLUGZEUGAUSSENLEUCHTE, FLUGZEUG DAMIT UND VERFAHREN ZUR ÜBERPRÜFUNG DES BETRIEBS EINER FLUGZEUGAUSSENLEUCHTE
LUMIÈRE EXTÉRIEURE D'AÉRONEF, AÉRONEF LA COMPRENANT ET PROCÉDÉ DE VÉRIFICATION DU FONCTIONNEMENT D'UNE LUMIÈRE EXTÉRIEURE D'AÉRONEF

(43) Date of publication of application: 24.09.2025
(73) Proprietor: Goodrich Lighting Systems GmbH & Co. KG, 59557 Lippstadt (DE)
(72) Inventor: Leuschner, Jens, 59519 Möhnesee (DE); Jha, Anil Kumar, 59555 Lippstadt (DE); Hessling-von Heimendahl, Andre, 56073 Koblenz (DE)
(74) Representative: Schmitt-Nilson Schraud Waibel Wohlfrom Patentanwälte Partnerschaft mbB

(56) References cited:
- US-A1- 2022 221 141
- US-A1- 20240 010 353
- US-A1- 20240 059 427

## Description

The present invention relates to aircraft lighting. In particular, it relates to exterior aircraft lights.

Almost all aircraft are equipped with exterior lighting systems. For example, large commercial aircraft have many different exterior aircraft lights. An exemplary group of exterior aircraft lights are lights for passive visibility, such as navigation lights and anti-collision lights. Another exemplary group of exterior aircraft lights are headlights that allow the pilots to view the area in front of them, when they are seated in the cockpit, such as taxi lights, take-off lights, landing lights, and runway turn-off lights. Yet another example of exterior aircraft lights are scan lights that allow the inspection of the aircraft structure in the dark, such as wing scan lights.

Exterior aircraft lights are exposed to very hazardous conditions. They have to withstand large aerodynamic forces, excessive particle impacts at high travelling velocities, as well as large temperature variations. The hazardous conditions cause erosion and/or other damage of light transmissive covers and/or parts of the housing of the exterior aircraft lights. This can lead to a premature failure of the exterior aircraft lights due to cracks or leaks in the light transmissive cover and/or parts of the housing.

US 2022/0221141 A1 discloses a method of determining operating conditions of an exterior aircraft light, which comprises at least one light source, wherein the method includes: operating the at least one light source of the exterior aircraft light; repeatedly detecting light with a light detector, which is located at the exterior aircraft light and configured for providing light detection values; determining a smallest light detection value provided by the light detector within a first period of time, and storing said smallest light detection value as an element of a series of smallest light detection values; and evaluating the light detection values and the series of smallest light detection values for detecting erosion of an optical component of the exterior aircraft light, for detecting the presence of ambient light and/or for detecting the presence of fog and/or clouds in front of the exterior aircraft light. The exterior aircraft light comprises an at least partially light transmissive cover, which covers the at least one light source and protects the at least one light source from adverse exterior influences, such as water, moisture, dust, dirt etc. The light source and the light detector may be arranged in different parts of a housing, which are separated by a blind. The light detector is arranged to receive light that travels through an opening in the blind.

US 2024/0010353 A1 discloses an aircraft beacon light that comprises an annular light source support having a plurality of light passing portions; a plurality of light sources, arranged on the annular light source support for a radially outwards emission of light flashes; a light detector for sensing a light output level of at least a subset of the plurality of light sources; and at least one optical element for shaping a beacon light output from light emitted by the plurality of light sources, the at least one optical element having at least one light guiding portion for capturing stray light from at least said subset of the plurality of light sources and for guiding said stray light through the plurality of light passing portions and towards the light detector.

US 2024/0059427 A1 discloses an exterior aircraft light that includes a support and a light transmissive cover having a light transmissive body with an interior surface and an exterior surface. The light includes at least one light source arranged between the support and the light transmissive cover; and a first light detector. The light transmissive cover has a first light guide path within the light transmissive body from a first light entry region to a first light exit region, wherein the first light detector is arranged to receive light that travels along the first light guide path and that exits the light transmissive cover at the first light exit region. The first light detector is configured to provide sensor measurements corresponding to the amount of light incident on the first light detector.

It would be beneficial to provide an exterior aircraft light with reliable integrated damage monitoring of the light transmissive cover and/or the housing. Furthermore, it would be beneficial to provide an aircraft with such an exterior aircraft light. In addition to this, it would be beneficial to provide a method for checking the operation of an exterior aircraft light.

Embodiments of the invention include an exterior aircraft light in accordance with claim 1, an aircraft in accordance with claim 14, and a method for checking the operation of an exterior aircraft light in accordance with claim 15. Further embodiments of the invention are given in the dependent claims.

Exemplary embodiments of the invention include an exterior aircraft light with a light source chamber; a comparative chamber; a support portion, wherein the support portion is interposed between the light source chamber and the comparative chamber; at least one light source, wherein the at least one light source is arranged in the light source chamber; at least one optical element, arranged over the at least one light source for shaping an exterior aircraft light output; a light transmissive cover, arranged over the at least one light source and the at least one optical element and closing the light source chamber; an airtight, elastic carrier, separating the light source chamber from the comparative chamber; and a deformation sensor, which is arranged with the elastic carrier.

Exemplary embodiments of the invention allow for a highly reliable monitoring of damage of the light transmissive cover and/or the housing of the exterior aircraft light. As compared to previous approaches, the exterior aircraft light damage monitoring does not rely on a human estimate of the damage of the exterior aircraft light. Rather, an automated damage monitoring, in particular a damage monitoring of the light transmissive cover and/or the housing, may become possible. This automated damage monitoring may have comparatively low complexity, a high ease of use, and a high reliability. In particular during flight and due to outside air pressure being lower than on the ground, a pressure loss in the light source chamber may occur if the light transmissive cover is cracked, otherwise damaged or its seals are defective. Furthermore, a pressure loss in the comparative chamber may occur if the pressure chamber or its seals are damaged. By obtaining a reading from the deformation sensor, which is adjacent to or at least partly embedded in the elastic carrier separating the light source chamber from the comparative chamber, pressure differences between the light source chamber and the comparative chamber may be detected. Depending on the sensor arrangement, it may also be possible to determine whether the pressure loss is in the light source chamber or the comparative chamber. By detecting pressure loss, critical erosion and/or other damage of the exterior aircraft light may be discovered earlier and more reliably than previously. This may lead to maintenance service being able to repair the exterior aircraft light by replacing parts of it, rather than having to replace the entire unit. Furthermore, an earlier and more reliable damage detection of the exterior aircraft light may prevent the exterior aircraft light from failing during flight and thus lead to better flight safety.

In exemplary embodiments of the exterior aircraft light, a barometric pressure sensor may not be required to detect a pressure loss inside the exterior aircraft light. Instead, a pressure difference can be detected using the deformation sensor arranged with the elastic carrier. This may allow defects in the exterior aircraft light to be identified in a particularly convenient manner. This arrangement may save space inside the exterior aircraft light and may reduce costs in the production of the exterior aircraft light.

The exterior aircraft light comprises the support portion. Other features of the exterior aircraft light may be fixed or mounted to the support portion. Thus, the support portion may provide support and/or electrical connections to other parts of the exterior aircraft light.

The exterior aircraft light further comprises the at least one light source. The at least one light source may be or may comprise at least one LED. The at least one LED in particular produces light in a color in accordance with the relevant aeronautical regulations. The at least one light source may be arranged on the support portion. Thus, a structural and/or electrical connection between the at least one light source and the support portion may be created. The at least one LED may be soldered onto the support portion. The at least one light source may comprise LEDs in several colors, such that the exterior aircraft light may be able to produce light in different colors.

In addition, the exterior aircraft light comprises the at least one optical element. The at least one optical element is arranged over the at least one light source for shaping an exterior aircraft light output. The light emitted by the exterior aircraft light may, thus, be shaped as desired or prescribed by regulation. The at least one optical element may transform the light intensity distribution, as emitted by the at least one light source, into the exterior aircraft light output.

The exterior aircraft light comprises a light source chamber and a comparative chamber. The support portion is interposed between the light source chamber and the comparative chamber. The light source chamber and the comparative chamber may be adjacent to each other. At least a part of the structure dividing the light source chamber and the comparative chamber is formed by the support portion.

The light source chamber contains the at least one light source. Furthermore, the light transmissive cover closes the light source chamber and delimits it towards the outside of the aircraft. The light transmissive cover is arranged over the at least one light source and the at least one optical element. The light transmissive cover protects the contents of the light source chamber from harsh flight conditions. In addition to this, the light transmissive cover is light transmissive, in particular transparent, for at least some frequencies of visible light, such that light formed by the at least one optical element can reach the outside of the exterior aircraft light.

The light transmissive cover may be directly attached or fixed to the support portion. In this case, the light source chamber may be delimited by the light transmissive cover, the support portion and the elastic carrier. Optionally, the light transmissive cover may be attached to a wall portion of the light source chamber, such that the light source chamber may be additionally delimited by said wall portion. There may be a seal situated between the light transmissive cover and the support portion. Furthermore, there may be a seal between the light transmissive cover and/or the support portion on the one hand and the wall portion of the light source chamber on the other. Leakage of the said seal(s) and/or damage of the light transmissive cover, the wall portion, and/or the support portion may be detected with exemplary embodiments of the invention described herein.

The at least one optical element is arranged over the at least one light source for shaping an exterior aircraft light output. The one or more optical element(s) may by molded over the at least one light source. In addition, the one or more optical element(s) may also be arranged over, in particular molded over, the support portion surrounding the at least one light source. Molding the at least one optical element may contribute to an efficient and economical way to produce the exterior aircraft light.

The exterior aircraft light comprises an airtight, elastic carrier separating the light source chamber from the comparative chamber. The elastic carrier may be deformed when a pressure difference between the light source chamber and the comparative chamber is created. For example, if the pressure in the light source chamber is higher than the pressure in the comparative chamber, the elastic carrier may move or be deformed towards the comparative chamber. Such a pressure difference may occur due to defects of the comparative chamber or its seals. If the opposite occurs, i.e., the pressure in the light source chamber is lower than the pressure in the comparative chamber, the elastic carrier may be deformed towards the light source chamber. This may occur in a case in which the light source chamber experiences a pressure drop, e.g., due to a crack or hole in the light transmissive cover. When the pressure difference between light source chamber and comparative chamber disappears, the elastic carrier may return to its original position.

The exterior aircraft light comprises the deformation sensor. The deformation sensor is arranged with the elastic carrier. The deformation sensor may be partly or entirely embedded inside the elastic carrier. Alternatively or additionally, the deformation sensor may at least in part be immediately adjacent to the elastic carrier. When the elastic carrier is deformed, the deformation sensor is also deformed, and this is registered by the deformation sensor. The deformation sensor may produce a signal according to its deformation. This may be a signal that depends on the current deformation of the deformation sensor or that depends on the current change in deformation of the deformation sensor.

According to a further embodiment, the elastic carrier may comprise an overmolded component, which may comprise silicone. The overmolded component may be overmolded over the deformation sensor. In this way, the overmolded component may serve to hold the deformation sensor in place, while also allowing it to be deformed depending on a pressure difference between the light source chamber and the comparative chamber. The deformation sensor may be at least partially embedded in the overmolded component and/or may be at least partially arranged on one surface of the overmolded component. The overmolded component may create an airtight separation of the light source chamber from the comparative chamber.

According to a further embodiment, the elastic carrier may form an integral part with the at least one optical element. The elastic carrier and the optical element may be molded in place together. The elastic carrier and the optical element may be made of the same material, in particular silicone. The silicone may be molded in one continuous piece over the at least one light source to yield the optical element and to obtain the elastic carrier adjacent to the at least one light source, including its overmolded component. This may provide both optical element and elastic carrier in the same production step. In case the at least one optical element is exactly one optical element, the elastic carrier may be integrally formed with said exactly one optical element. In case the at least one optical element is a plurality of optical elements, the elastic carrier may be integrally formed with one or a subset of all of the plurality of optical elements.

According to a further embodiment, the elastic carrier may be arranged over or in a through-hole of the support portion. Alternatively or additionally, the elastic carrier may be arranged over a mesh-like structure or over a perforated part of the support portion. Without the elastic carrier and the deformation sensor in place, the through-hole, mesh-like structure and perforated part may connect the light source chamber and the comparative chamber and may allow air to pass from one of the said chambers to the other. The elastic carrier is arranged over the through-hole, mesh-like structure and/or perforated part to provide an airtight separation between the light source chamber and the comparative chamber. If a pressure difference between light source chamber and comparative chamber exists, the elastic carrier may be deformed towards the chamber with the lower pressure and the deformation sensor may detect said deformation.

According to a further embodiment, the exterior aircraft light may comprise two deformation sensors. The two deformation sensors may be arranged on opposite sides of the support portion. The two deformation sensors may in particular cover the through-hole, mesh-like structure and/or perforated part of the support portion from both sides. There may be a gap between at least one of the deformation sensors and the support portion. At least one of the deformation sensors may be immediately adjacent to the support portion. At least one of the deformation sensors may be arranged such that it can only be deformed away from the support portion. In this way, it may be possible that only one of the two deformation sensors is deformed when a pressure difference between light source chamber and comparative chamber exists. One of the deformation sensors may be deformed towards the chamber with the lower pressure while the other will not be deformed as the support portion keeps it in place. If one of the sensors is adjacent to a gap with the support portion, this deformation sensor may be deformed in both directions. In combination with another deformation sensor that is immediately adjacent to the support portion and that, thus, can only be deformed away from the support portion, the direction of the pressure difference can be detected. This arrangement may be particularly useful for deformation sensors that cannot differentiate the direction of deformation by themselves.

According to a further embodiment, the elastic carrier may comprise a portion of reduced thickness of the support portion. This portion of reduced thickness may be deformed by a pressure difference between the two chambers. If the deformation sensor is arranged on a surface of the portion with reduced thickness, then the deformation can be detected by the deformation sensor. This may be a particularly efficient way to produce the elastic carrier. For example, the portion of reduced thickness of the support portion may be produced by drilling or by milling or by some other form of machining a cavity in the support portion. In some embodiments, the elastic carrier in its entirety may be sufficiently thin to be deformed if there is a pressure difference between light source chamber and comparative chamber. In this case, the portion of reduced thickness may extend over the entire support portion.

According to a further embodiment, the light source chamber may be hermetically sealed. Furthermore, the comparative chamber may be hermetically sealed. The light source chamber and/or comparative chamber may in an embodiment not permit any gas or liquid to enter or exit. This avoids moisture entering the light source chamber and/or comparative chamber. Such moisture could otherwise damage the at least one light source or electronics components contained within the light source chamber or comparative chamber. Furthermore, in an hermetically sealed light source chamber or comparative chamber, a loss of pressure can be interpreted as a defect of a bounding wall, light transmissive cover or seal. In some embodiments, the comparative chamber may not be hermetically sealed. This may allow pressure to equalize with outside air at different flight altitudes.

According to a further embodiment, the support portion may comprise a printed circuit board (PCB). In this way, the support portion may be able to provide physical support and mechanical stability as well as electrical connections to other parts of the exterior aircraft light, in particular to the at least one light source. The at least one LED may be soldered onto the PCB comprised by the support portion. The elastic carrier may be a portion of the PCB that shows a reduced thickness. It is also possible that the entire PCB is sufficiently thin to function as the elastic element.

According to a further embodiment, the deformation sensor may be or may comprise a piezo foil or a strain gauge. The deformation sensor may comprise a piezo foil. Such a piezo foil may be able to provide a signal according to a deformation of the sensor or a rate of change of deformation of the sensor. In some embodiments, the piezo foil may require only a relatively simple evaluation circuit as the foil itself creates a voltage on deformation and does not require its own power supply. The polarity of the voltage created by the deformation of the piezo foil may indicate the direction in which it was deformed. The strain gauge may provide a signal according to a deformation. In some embodiments, the strain gauge may be able to provide the direction of deformation.

According to a further embodiment, the comparative chamber may contain electronic circuitry, in particular electronic circuitry for supplying power to and/or for checking and controlling the at least one light source. The comparative chamber may contain power electronics such as a power supply to convert electricity provided by the aircraft to the requirements of the electronic circuitry within the exterior aircraft light.

According to a further embodiment, the exterior aircraft light may comprise an evaluation unit coupled to the deformation sensor. The evaluation unit may be configured to determine a relative pressure behavior between the light source chamber and the comparative chamber. The determination of the relative pressure may be derived from sensor data provided by the deformation sensor. The evaluation unit may detect whether there is a pressure difference during flight, in particular if the light source chamber and/or the comparative chamber are not / no longer hermetically sealed.

According to a further embodiment, the exterior aircraft light may comprise a control unit and/or additional electronic circuitry for controlling and/or checking the at least one light source, in particular the at least one LED. The control unit may be arranged in the light source chamber or in the comparative chamber or at another suitable location of the exterior aircraft light. The control unit may also be mounted to the PCB of the support portion, in particular on a side of the PCB facing away from the light source chamber or on a side of the PCB facing the light source chamber. Such control unit / electronic circuitry could in some cases comprise an LED driver circuit. The exterior aircraft light may comprise a control unit for controlling and/or checking the at least one light source. The evaluation unit may be separate from and coupled to the control unit. Alternatively, the control unit may contain the evaluation unit and may, thus, be configured to detect a pressure difference between the light source chamber, the comparative chamber and/or other chambers of the exterior aircraft light. In this way, the control unit may be able to reliably detect a defect in the light source chamber (e.g., due to a leak in the light transmissive cover) and/or in the comparative chamber. The evaluation unit / control unit may be able to communicate with a communication system of the aircraft such that a pressure difference may be communicated to a central data processing unit of the aircraft. Furthermore, upon detecting a pressure loss in the light source chamber or comparative chamber, the evaluation unit / control unit may be able to send (e.g., via LED) an alarm signal, status signal, damage indication, status indication, light signal or light pattern to alert ground staff that maintenance may be necessary or beneficial. In this way, the evaluation unit / control unit may be able to switch on a dedicated warning light or to control the existing lights.

According to a further embodiment, the exterior aircraft light may contain a further chamber. The further chamber may contain power electronics. The further chamber may be adjacent to the comparative chamber. The comparative chamber may or may not be hermetically sealed with respect to the further chamber. The further chamber may or may not be hermetically sealed. There may be a seal present between parts of the comparative chamber and parts of the further chamber. The exterior aircraft light may contain one or several further chambers. The further chamber or further chambers may contain electronic circuitry, such as power electronics and/or the control unit. In some embodiments, a leakage of the said seals may be possible to be detected.

According to a further embodiment, the at least one optical element may comprise or consist of silicone. The at least one optical element may comprise silicone overmolded over the support portion. This may represent a simple and efficient way to produce an optical element.

According to a further embodiment, the exterior aircraft light is an aircraft headlight for example an aircraft landing light, an aircraft take-off light, an aircraft taxi light, an aircraft runway turn-off light or a multi-functional aircraft headlight, which combines the functionalities of any two or any three or all of an aircraft landing light, an aircraft take off light, an aircraft taxi light and an aircraft runway turn-off light.

According to a further embodiment, the exterior aircraft light is an aircraft navigation light, in particular a wingtip mounted aircraft navigation light or an aircraft tail mounted aircraft navigation light.

According to a further embodiment, the exterior aircraft light is a white strobe anti-collision light, in particular a wingtip-mounted or tail-mounted white strobe anti-collision light.

According to a further embodiment, the exterior aircraft light is a red-flashing aircraft beacon light, in particular a fuselage-mounted red-flashing aircraft beacon light. A red-flashing aircraft beacon light according to an exemplary embodiment of the invention may be configured such that it can be mounted to a top portion or to a bottom portion of an aircraft fuselage.

According to a further embodiment, the exterior aircraft light is a logo light or a wing scan light or an engine scan light or a cargo loading light.

Exemplary embodiments of the invention also include an aircraft, such as an airplane or helicopter, comprising at least one exterior aircraft light according to an exemplary embodiment of the invention. The additional features, modifications and effects, as described above with respect to an exterior aircraft light in accordance with exemplary embodiments of the invention, apply to the aircraft in an analogous manner.

Exemplary embodiments of the invention further include a method for checking or controlling the operation of the exterior aircraft light, said method comprising the steps of: providing sensor data from the deformation sensor; determining a relative pressure between the light source chamber and the comparative chamber from the sensor data; and deriving an indication of status of the integrity (airtightness) of the light source chamber and/or the comparative chamber. In particular during flight, when outside air pressure is lower than at ground level, a loss of a hermetic seal of the light source chamber or the comparative chamber can lead to a loss of pressure in that chamber. The elastic carrier may then be deformed towards the chamber due to the pressure loss and the deformation sensor will provide a signal due to its deformation. The signal by the deformation sensor may indicate that a damage to the hermetic seal has occurred, e.g., due to a crack in the light transmissive cover of the light source chamber. The control unit may be configured to carry out at least parts of the method for checking and controlling the operation of the exterior aircraft light.

Further exemplary embodiments of the invention are described below with respect to the accompanying drawings, wherein:
Figure 1 shows a schematic top view of an aircraft according to an exemplary embodiment of the invention, which is equipped with a variety of exterior aircraft lights;
Figure 2 shows a schematic front view of the aircraft shown in Figure 1;
Figure 3 shows an exterior aircraft light in accordance with an exemplary embodiment of the invention in a cross sectional view;
Figure 4 shows selected components of the exterior aircraft light of Figure 3 in the same cross sectional view, illustrating the optical behavior thereof with exemplary light rays;
Figure 5 shows selected components of the exterior aircraft light of Figure 3 in a perspective view;
Figure 6 shows an exterior aircraft light in accordance with another exemplary embodiment of the invention in a cross sectional view;
Figure 7 shows selected components of the exterior aircraft light of Figure 6 in a perspective view;
Figure 8 shows an exterior aircraft light in accordance with an exemplary embodiment of the invention in a cross sectional view, the exterior aircraft light having an elastic carrier over a through-hole in the support portion;
Figure 9 shows the exterior aircraft light of Figure 8 in a first modification, with the elastic carrier over a perforated part in the support portion, the first modification forming an exemplary embodiment of the invention;
Figure 10 shows the exterior aircraft light of Figure 9, with a deformation of the elastic carrier over the perforated part in the support portion; and
Figure 11 shows the exterior aircraft light of Figure 8 in a second modification with two deformation sensors, the second modification also forming an exemplary embodiment of the invention.

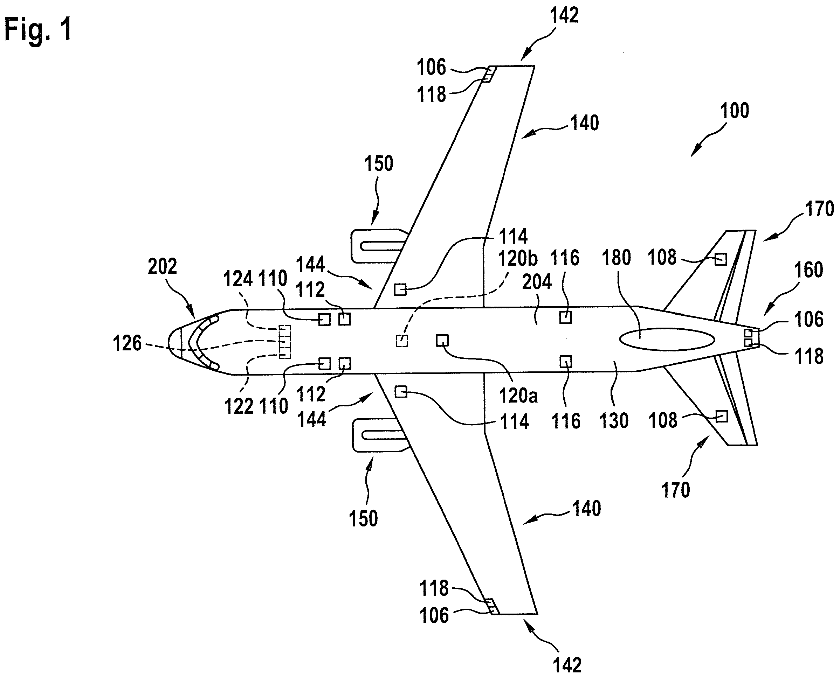

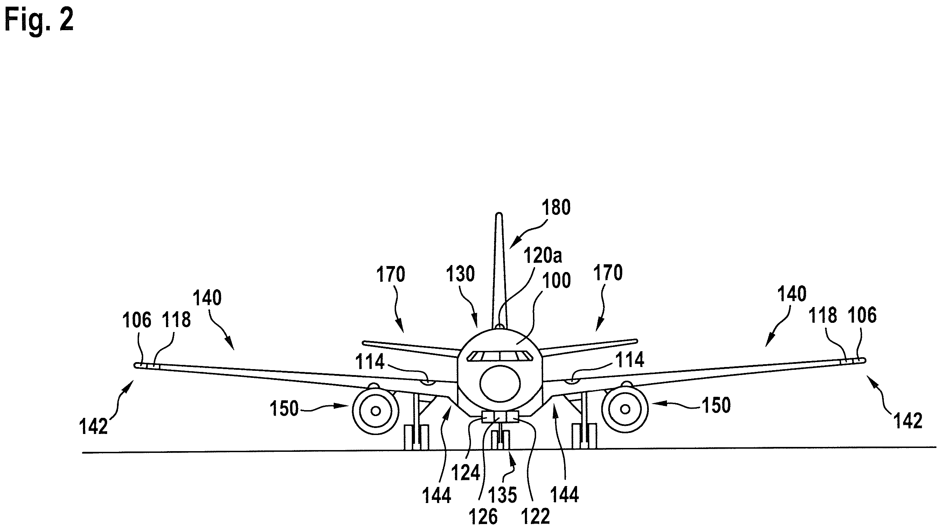

Figures 1 and 2 show an aircraft 100, in particular an airplane, comprising a fuselage 130, which houses a cockpit 202 and a passenger cabin 204, and two wings 140, extending from the fuselage 130. Two horizontal stabilizers 170 and a vertical stabilizer 180 extend from a rear portion of the fuselage 130. An engine 150 is mounted to each of the wings 140, respectively. The aircraft 100 is shown in a top view in Figure 1 and shown in a front view in Figure 2.

The aircraft 100 of Figures 1 and 2 is equipped with a wide variety of exterior aircraft lights. In particular, the aircraft 100 is equipped with three navigation lights 106, two logo lights 108, two wing scan lights 110, two engine scan lights 112, two runway turn-off lights 114, two cargo loading lights 116, three white anti-collision strobe lights 118, two red-flashing anti-collision beacon lights 120a, 120b, a landing light 122, a take-off light 124 and a taxi light 126. Any subset or all of these lights may be exterior aircraft lights according to exemplary embodiments of the invention. It is pointed out that the depicted kinds of lights and their numbers are exemplary only and that the aircraft 100 may be equipped with additional lights that are not shown.

The three navigation lights 106 are positioned in the left and right wing tips 142 as well as at the tail 160 of the aircraft 100. In normal flight conditions, each one of the navigation lights 106 emits light in one of the colors green, red and white, thus indicating to the aircraft environment if they are looking at the port side, starboard side or tail side of the aircraft. The navigation lights 106 are normally on during all phases of the flight and in all flight conditions.

The logo lights 108 are directed to the vertical stabilizer 180 of the aircraft 100 and are provided for illuminating the same, in particular for illuminating the logo commonly provided on the vertical stabilizer 180. The logo lights 108 are normally switched on for the entire duration of the flight during night flights. It is also possible that the logo lights are only used during taxiing on the airport and are normally switched off during the flight.

The wing scan lights 110 and the engine scan lights 112 are positioned on the left and right sides of the fuselage 130, in front of the roots 144 of the wings 140 of the aircraft 100. The wing scan lights 110 and the engine scan lights 112 are normally off during the flight and may be switched on periodically or upon reasonable cause by the pilots or by the aircrew, in order to check the wings 140 and the engines 150 of the aircraft 100.

The runway turn-off lights 114 are positioned in the roots 144 of the wings 140. The runway turn-off lights 114 are directed forwards and are normally switched off during the flight and switched on during taxiing, at least at night.

The cargo loading lights 116 are positioned on the left and right sides of the fuselage 130, behind the wings 140 and in front of the tail structure of the aircraft 100. They are normally switched off during the flight of the aircraft 100.

The white anti-collision strobe lights 118 are positioned in the left and right wing tips 142 as well as at the tail 160 of the aircraft 100. The white anti-collision strobe lights 118 emit respective sequences of white light flashes during normal operation of the aircraft 100. It is also possible that the white anti-collision strobe lights 118 are only operated during night and in bad weather conditions.

A first red-flashing anti-collision beacon light 120a is positioned on the top of the fuselage 130 of the aircraft 100, and a second red-flashing anti-collision beacon light 120b is positioned at the bottom of the fuselage 130 of the aircraft 100. The second red-flashing anti-collision beacon light 120b, disposed on the bottom of the fuselage 130, is shown in phantom in Figure 1.

The first and second red-flashing anti-collision beacon lights 120a, 120b are arranged at the height of the wings in the longitudinal direction of the aircraft 100. The red-flashing anti-collision beacon lights 120a, 120b are normally switched on during taxiing and during take-off and landing. Their output is perceived as a sequence of red light flashes in a given viewing direction.

In the embodiment depicted in Figures 1 and 2, the runway turn-off lights 114 are located in the wings 140, in particular in the roots 144 of the wings 140, and the landing light 122, the take-off light 124 and the taxi light 126 are mounted to the front gear 135 of the aircraft 100. The front gear 135 is stored within the fuselage 130 of the aircraft 100 during flight, and it is deployed during landing, taxiing and take off.

In alternative embodiments, which are not explicitly shown in the figures, the runway turn-off lights 114 may be mounted to the front gear 135 and/or at least one of the landing light 122, the take-off light 124 and the taxi light 126 may be installed in the wings 140, in particular in the roots 144 of the wings 140, of the aircraft 100.

The aircraft 100 may also comprise one or more multi-functional lights, which combine(s) the functionalities of at least two of a landing light, a take-off light, a taxi light, and a runway turn-off light.

Since the landing light 122, the take-off light 124, and the taxi light 126 are arranged on the bottom of the aircraft 100, they are also depicted in phantom in Fig-ure 1.

Each of the said exterior aircraft lights may be an exterior aircraft light according to an exemplary embodiment of the invention. When equipped with one or more exterior aircraft lights in accordance with exemplary embodiments of the invention, the aircraft 100 is an aircraft in accordance with an exemplary embodiment of the invention.

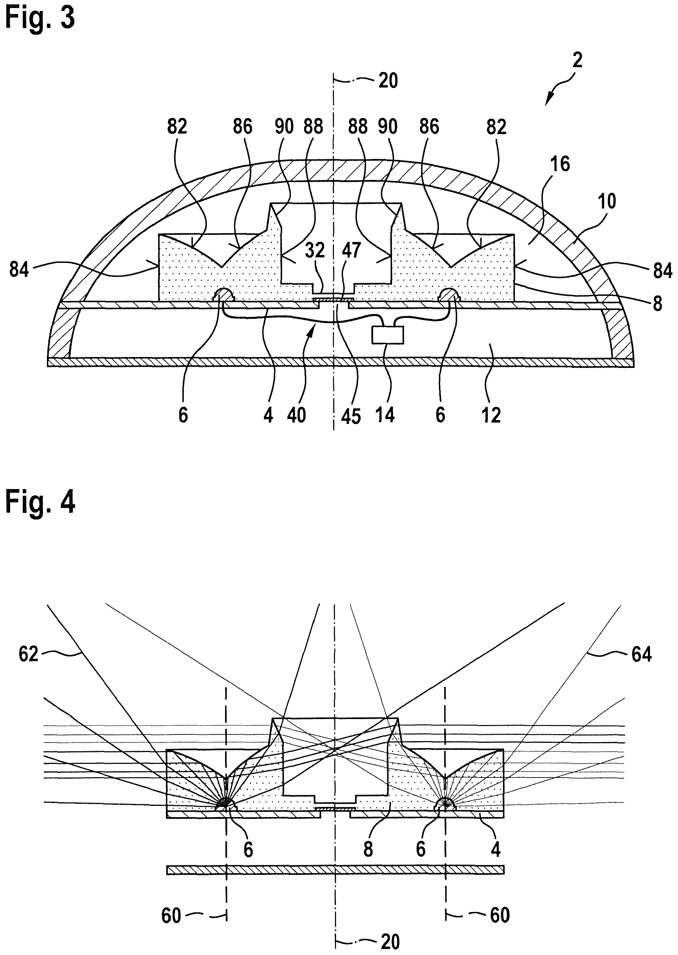

Figure 3 shows an exterior aircraft light 2, implemented as an aircraft beacon light, in accordance with an exemplary embodiment of the invention. The term aircraft beacon light is used as an abbreviation for the term red-flashing anti-collision beacon light, as used above. The aircraft beacon light 2 a fuselage-mounted aircraft beacon light and is shown in a cross-sectional view in Figure 3. The aircraft beacon light 2 is a rotationally symmetric light around an axis of symmetry 20, the cross-sectional view of Figure 3 may be any vertical cross-sectional view going through the axis of symmetry 20 of the aircraft beacon light 2 and cutting through two light sources 6. For ease of reference, it is assumed that the depicted cross-sectional view is a lateral vertical cross-sectional view in the aircraft frame of reference, i.e., a vertical cross sectional view going from the left to the right in the aircraft frame of reference, orthogonal to a forward flight direction of the aircraft 100.

The aircraft beacon light 2 has a support portion 4 which is disc-shaped in the exemplary embodiment of Figure 3. The support portion 4 has a central portion 40, around which a plurality of light sources 6 are arranged. In the exemplary embodiment of Figure 3, the plurality of light sources 6 are arranged in a circular manner around the central portion 40 of the support portion 4. In particular, the plurality of light sources 6 are arranged between the central portion 40 of the support portion 4 and a circumferential edge of the support portion 4. In the cross-sectional view of Figure 3, two of the plurality of light sources 6 are depicted.

In the exemplary embodiment of Figure 3, the plurality of light sources 6 are LEDs. In particular, the plurality of light sources 6 are red LEDs. As such they emit red light in operation, which in turn provides for a red light emission by the aircraft beacon light 2 without the need for additional color filters or similar structures.

The support portion 4 is arranged between a light source chamber 16 and a comparative chamber 12. In this embodiment, the comparative chamber 12 forms the part of the aircraft beacon light 2 that is closest to the aircraft body and that is configured to be mounted to the fuselage of the aircraft. The comparative chamber 12 may alternatively be mounted inside the aircraft body. A control unit 14 is provided in the comparative chamber 12. The control unit 14 is coupled to the plurality of light sources 6 and effects a pulsed power supply to the plurality of light sources 6 in operation. In this way, the plurality of light sources 6 provide for the red-flashing effect of the aircraft beacon light 2. The control unit 14 may be coupled to an on-board power supply network or to an according power supply circuitry inside the exterior aircraft light 2 and may pass on the received power to the plurality of light sources 6. The control unit 14 may be embodied entirely in hardware or may comprise a suitable combination of hardware and software for achieving the desired control of the plurality of light sources 6. It is also possible that the support portion 4 is a printed circuit board (PCB) carrying all power connections to the plurality of light sources 6, according controlling circuitry and power supply circuitry. The controlling circuitry and/or the power supply circuitry may also be mounted on the PCB.

The aircraft beacon light 2 further comprises an optical element 8. The optical element 8 is a unitary, rotationally symmetric optical element 8 in the exemplary embodiment of Figure 3. In other words, the unitary optical element 8 is arranged within the aircraft beacon light 2 for conditioning the light output of the aircraft beacon light 2. The optical element 8 is an annular structure that is arranged over the plurality of light sources 6 and on the support portion 4. The optical element 8 is made from silicone and is molded over the plurality of light sources 6 onto the support portion 4. In other words, during manufacture, the material of the optical element 8 may be brought into its eventual shape in a molding process right over the plurality of light sources 6 and the support portion 4. It is also possible that the optical element 8 is molded as a separate element and is attached to the support portion 4, enclosing the plurality of light sources 6 between the support portion 4 and the optical element 8.

As the optical element 8 is a rotationally symmetric component, the cross-sectional view of Figure 3 shows two mirror-symmetrical portions of the optical element 8 towards the left and towards the right of the central portion 40 of the support portion 4. It is understood that the individual surfaces and portions of the optical element 8, which will be described below, extend around the central portion 40 of the support portion 4 in a revolving manner.

The optical element 8 has a light entry surface, which is the boundary surface with the plurality of light sources 6, a first total internal reflection surface 82, which is distal from the support portion 4 and positioned laterally outwards of the plurality of light sources 6, a second total internal reflection surface 86, which is distal from the support portion 4 and laterally inwards of the plurality of light sources 6, a first light exit surface 84, which is substantially orthogonal to the support portion 4 and forms the laterally outermost part of the optical element 8, and a second light exit surface 88, which is substantially orthogonal to the support portion 4 and which is positioned between the plurality of light sources 6 and the central portion 40 of the support portion 4, i.e., laterally inwards of the plurality of light sources 6 and the second total internal reflection surface 86.

In addition, the optical element 8 of the exemplary embodiment of Figure 3 comprises a refractive portion 90, which forms the most distal part of the optical element 8 with respect to the support portion 4 and which is arranged between the second light exit surface 88 and the second total internal reflection surface 86, when considering the distance from the axis of symmetry 20. The optical operation of those surfaces and portions of the optical element 8 will be described below with respect to exemplary light rays, as illustrated in Figure 4.

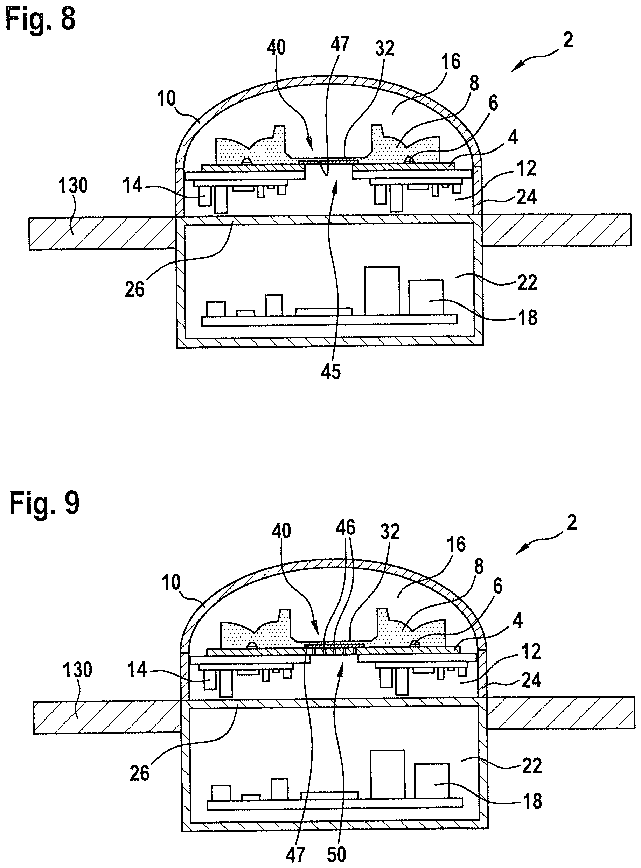

At the central portion 40 of the support portion 4, a through-hole 45 through the support portion 4 is provided. An elastic carrier 32, which is an integral part of the optical element 8, is arranged over the through-hole 45, separating the light source chamber 16 and the comparative chamber 12 at the central portion 40 of the support portion 4. A deformation sensor 47 is arranged with the elastic carrier 32. The functioning and purpose of the elastic carrier 32 and the deformation sensor 47 will be described below, starting with the description of Figure 8.

The aircraft beacon light 2 of Figure 3 further comprises a light transmissive cover 10. The light transmissive cover 10 is mounted to the support portion 4 and forms the light source chamber 16 between the support portion 4 and the light transmissive cover 10, in which the plurality of light sources 6 and the optical element 8 are arranged. The light transmissive cover 10, thus, protects the optical element 8, the plurality of light sources 6 and the support portion 4 during the flight of the aircraft.

The light transmissive cover 10 may also comprise a red color filter. In this case, the plurality of light sources 6 may be white light sources, such as white LEDs, with the red color filter achieving an emission of red light flashes, as seen by the observer. It is also possible that a red color filter is provided as an additional structure, for example between the optical element 8 and the light transmissive cover 10 or between the plurality of light sources 6 and the optical element 8.

Figure 4 shows selected components of the exterior aircraft light 2 of Figure 3, such as the support portion 4, the plurality of light sources 6 and the optical element 8 of the aircraft beacon light 2 of Figure 3 in a cross-sectional view. In addition, Figure 4 shows exemplary light rays 62 as emitted by the depicted light source 6 on the left hand side of Figure 4 and shows exemplary light rays 64 as emitted by the depicted light source 6 on the right hand side of Figure 4. In order to draw better attention to the exemplary light rays 62, 64, the reference numerals to the individual surfaces and portions of the optical element 8 are omitted from Fig-ure 4. However, it is pointed out that the reference numerals of Figure 3 apply to Figure 4 in complete analogy.

For ease of illustration, the principal light emission directions of the light sources 6 are indicated with dashed lines 60 in Figure 4, which are orthogonal to the support portion 4. The light sources 6, which are LEDs in the exemplary embodiment of Figures 3 and 4, are directed light sources having the main emission direction orthogonal to the support portion 4.

The first portion of light emitted by a given light source 6 enters the optical element 8 right after exiting the light source 6, reaches the first total internal reflection surface 82, experiences total internal reflection at the first total internal reflection surface 82 and is reflected laterally outwards. While being reflected laterally outwards, the first portion of light is collimated in a direction parallel to the support portion 4, i.e., it is collimated within the horizontal plane in the aircraft frame of reference.

The exemplary light rays of the first portion of light hit the first light exit surface 84 in an orthogonal manner and, therefore, pass the first light exit surface 84 without further refraction. For achieving said collimation, the first total internal reflection surface 82 has a parabolic shape in cross-section, as illustrated in Figures 3 and 4.

A second portion of light enters the optical element 8 from the light source 6 and reaches the second total internal reflection surface 86, experiences total internal reflection at the second total internal reflection surface 86, and exits the optical element 8 for a first time at the second light exit surface 88. The second total internal reflection surface 86 is also parabolic. However, the parabolic shape is tilted in such a way with respect to the support portion 4 that the exemplary light rays are not collimated parallel to the support portion 4, but somewhat angled upwards as compared to the support portion 4. The exemplary light rays of the second portion of light experience an additional refraction at the second light exit surface 88. The second portion of light, after passing the second light exit surface 88, reenters the optical element 8 at the refractive portion 90. The refractive portion 90 refracts the second portion of light to be parallel with respect to the support portion 4. In this way, the second portion of light is also emitted in or close to the horizontal plane of the aircraft in the aircraft frame of reference.

A third portion of light emitted by the light source 6 enters the optical element 8 after being emitted by the light source 6 and propagates right to the first light exit surface 84. There, the third portion of light is refracted into various angular directions.

A fourth portion of light enters the optical element 8 after being emitted by the light source 6 and propagates right to the second light exit surface 88 and the refractive portion 90. There, the fourth portion of light experiences refraction into various angular regions.

With the given optical element 8, a highly efficient fulfilling of the FAR requirements for aircraft beacon lights 2, requiring a high intensity peak in the horizontal plane in the aircraft frame of reference and requiring a decreasing intensity for larger angles with respect to the horizontal plane, can be achieved. The total internal reflection at the first and second total internal reflection surfaces 82, 86 allows for providing the peak in the horizontal plane in a particularly space-efficient and energy-efficient manner. As compared to previous approaches where complex optical systems, based on metallic reflectors, were used, an FAR compliant beacon light output may be achieved with up to 80% reduction in beacon light volume and up to 60% reduction in height over the aircraft fuselage. In this way, an aerodynamic drag can be reduced and the exposure to damaging particles and larger structures, such as birds, can be reduced.

While the set-up of the aircraft beacon light 2, as described above with respect to Figures 3 and 4, provides for a space-efficient implementation, it is stressed that other set-ups of aircraft beacon lights are possible as well and can be equipped with the damage detection functionality described below, starting with Figure 8. More in general, the damage detection functionality described below can be applied to a wide range of exterior aircraft lights. The given example of an aircraft beacon light is provided for an illustration of the working principles of the damage detection functionality.

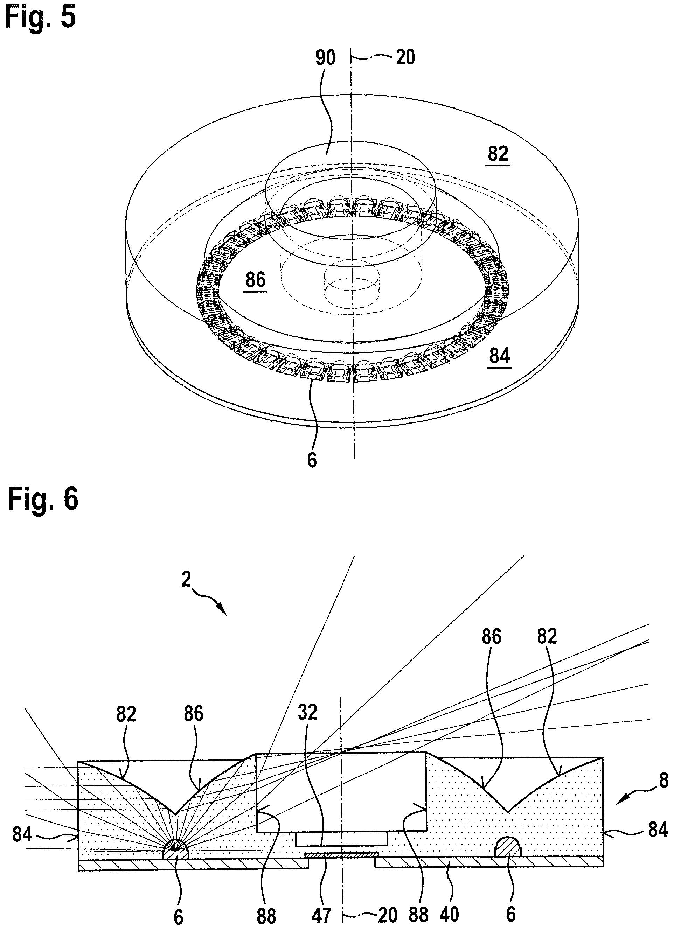

Figure 5 shows the optical element 8 and the plurality of light sources 6 of the aircraft beacon light of Figures 3 and 4 in a 3-dimensional, perspective view. Figure 5 illustrates the rotationally symmetric, annular structure of the optical element 8, with the first total internal reflection surface 82, the first light exit surface 84, the second total internal reflection surface 86 and the refractive portion 90 all revolving around the axis of symmetry 20.

The plurality of light sources 6 are arranged in a circular manner around the axis of symmetry 20. In the exemplary embodiment of Figures 3 to 5, 36 red LEDs are provided around the axis of symmetry 20. The LEDs are arranged next to each other along the circular outline.

It is pointed out that the plurality of light sources 6 may also comprise infrared light sources. For example, every other or every third or every fourth of the plurality of light sources 6 may be an infrared light source. In this way, the aircraft beacon light may be operated both in a visible light mode, emitting flashes of red light, and in a covert mode, emitting flashes of infrared light.

Figure 6 shows an aircraft beacon light 2 in accordance with another exemplary embodiment of the invention. The aircraft beacon light 2 of Figure 6 is similar to the aircraft beacon light 2 shown throughout Figures 3 to 5. The description of Figure 6 focuses on the differences between this embodiment and the embodiment of Figures 3 to 5. For the remainder of the features and components, reference is made to the description of Figures 3 to 5. Also, for ease of illustration, Figure 6 only shows the support portion 4, the plurality of light sources 6, and the optical element 8 in a cross-sectional view. The aircraft beacon light 2 of Figure 6 also has a light transmissive cover 10 and a control unit 14 as shown in Figure 3.

The optical element 8 of the exemplary embodiment of Figure 6 has a second total internal reflection surface 86 that is different from the second total internal reflection surface 86 of the embodiment of Figures 3 to 5. In particular, the second total internal reflection surface 86 is not parabolic in cross-section, but has a free-form shape. This free-form shape reflects the second portion of light into various angular directions, with all of those directions, as modified by the second light exit surface 88, leading past the optical element 8 on the other side of the aircraft beacon light 2. In this way, the second portion of light is used mainly for satisfying FAR requirements at larger angles with respect to the horizontal plane, as compared to the embodiment of Figures 3 to 5. With the first portion of light still providing a strong peak in the horizontal plane, it is also possible to satisfy the FAR requirements with the optical element 8 of Figure 6. It is further pointed out that the optical element 8 of the aircraft beacon light 2 of Figure 6 does not have a refractive portion 90, as shown in Figures 3 to 5. In the absence of this refractive portion 90, laterally inwards reflected light may pass the other side of the optical element 8 more easily and may thus contribute to a strong light output at small angles with respect to the horizontal plane.

In general, it is pointed out that the first total internal reflection surface does not have to be parabolic and may have different shapes for achieving the desired total internal reflection. Also, in place of the second total internal reflection surface, other optical structures may be provided for conditioning the second portion of light.

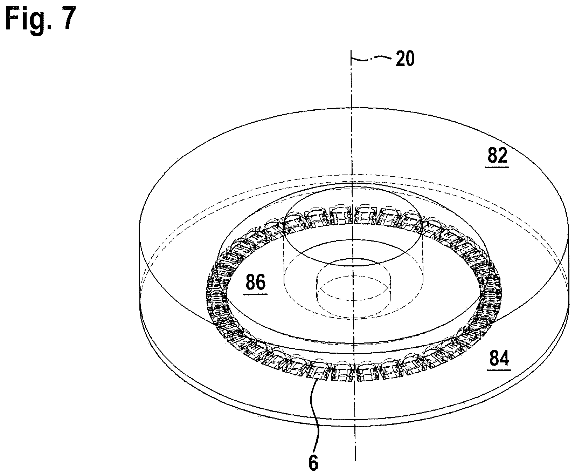

Figure 7 shows the plurality of light sources 6 and the optical element 8 of Figure 6 in a 3-dimensional, perspective view. Again, Figure 7 shows the annular structure and the arrangement of the plurality of light sources 6 along a circular outline.

Figure 8 shows an exterior aircraft light 2 in accordance with an exemplary embodiment of the invention in a cross-sectional representation. The exterior aircraft light 2 of Figure 8 is also an aircraft beacon light. Overall, the exterior aircraft light 2 of Figure 8 has a design very similar to the aircraft beacon lights of Figures 3 to 7, and the above description of Figures 3 to 7 can be consulted for a more detailed description of some of the components of the exterior aircraft light 2. The following description mainly focuses on the damage detection functionality, embodied in the exterior aircraft light 2.

The exterior aircraft light 2 comprises a light source chamber 16 that is bounded by a light transmissive cover 10 and a support portion 4. The support portion 4 has a two-component set-up in the exemplary embodiment of Figure 8 and comprises a structural wall and a PCB, arranged on the structural wall. The support portion 4 contains a through-hole 45 in its central portion 40.

A plurality of light sources 6 are mounted in an annular arrangement on the PCB, and an optical element 8 is molded on top of the plurality of light sources 6, as described above with respect to Figures 3 to 7. The through-hole 45 in the support portion 4 is covered by an airtight, elastic carrier 32. The elastic carrier 32 and the optical element 8 are manufactured as an integral part. In this case, they are molded as one part over the plurality of light sources 6, the support portion 4 and the through-hole 45. Adjacent and attached to the elastic carrier 32 or at least partially embedded therein is a deformation sensor 47. At the edges of the through-hole 45, the deformation sensor may 47 touch the support portion 4.

When the elastic carrier 32 is elastically deformed, the deformation sensor 47 is deformed as well. In consequence, the deformation sensor 47 will produce a signal that may be evaluated by an evaluation unit contained in a control unit 14 of the exterior aircraft light 2. The deformation sensor 47 may be a piezo foil or a strain gauge or other suitable deformation sensor. With the elastic carrier 32 and the deformation sensor 47 both being deformable / bendable, a pressure difference between the light source chamber 16 and the comparative chamber 18 may be detected. Depending on the relative pressure between the light source chamber 16 and the comparative chamber 18, the combination of the elastic carrier 32 and the deformation sensor 47 may stay flat or bend upwards or bend downwards. Depending on the deformation sensor used, the sensor signal may indicate the presence of absence of bending / deformation and, potentially, the extent of bending deformation and, potentially, the direction of bending / deformation. Said information may be communicated to the control unit 14 via an electric signal, provided on a signal line to the control unit 14.

The control unit 14 may be arranged in the comparative chamber 12 as shown in Figure 8. Alternatively, the control unit 14 may be arranged in the light source chamber 16 or a further chamber 22 adjacent to the comparative chamber. Power electronics 18, which supply the plurality of light sources 6 and the control unit 14 with electrical power, are arranged in the further chamber 22 in Figure 8. Alternatively, the power electronics 18 may be arranged in the light source chamber 16 or comparative chamber 12.

On the basis of the signal from the deformation sensor 47, the control unit 14 can deduce an indication regarding the integrity of the light source chamber 16 and/or the comparative chamber 18. In case both the light source chamber 16 and the comparative chamber 18 are hermetically sealed, the pressure within these chambers should not change during flight of the aircraft, although the outside pressure decreases significantly. In particular, the relative pressure between the light source chamber 16 and the comparative chamber 18 should stay the same during flight. Accordingly, the elastic carrier 32 and the deformation sensor 47 should stay flat over the through-hole 45. In case the hermetic sealing of the light source chamber 16 or the comparative chamber 12 is compromised, e.g. via a crack in the light transmissive cover 10 or via a failing of a seal of one of the chambers, there will be a pressure difference between the light source chamber 16 and the comparative chamber 12 in flight. While one chamber is still hermetically sealed and its pressure stays at substantially ground pressure, the pressure in the other chamber decreases in accordance with the altitude of the aircraft. In case the readings from the deformation sensor 47 indicate that the elastic carrier 32 and the deformation sensor 47 bend upwards during flight, it can be deduced that the light source chamber 16 is no longer hermetically sealed, indicating e.g. a crack in the light transmissive cover 10. In case the readings from the deformation sensor 47 indicate that the elastic carrier 32 and the deformation sensor 47 bend downwards during flight, it can be deduced that the comparative chamber 12 is no longer hermetically sealed, indicating e.g. a failure of a seal of the comparative chamber 12.

The comparative chamber 12 is separated from the light source chamber 16 by the support portion 4. The comparative chamber 12 further comprises an outer wall 24 delimiting the comparative chamber 12 towards the outside. Furthermore, the comparative chamber 12 is bounded by a delimiting wall 26, arranged to separate the comparative chamber 12 from the further chamber 22. Figure 8 shows the fuselage 130 of the aircraft 100. The exterior aircraft light 2 protrudes beyond the outside surface of the fuselage 130 with its light source chamber 16 and comparative chamber 12. Alternatively, the comparative chamber 12 may be partially or entirely inside the fuselage 130. The same or similar arrangements may apply in analogy if the exterior aircraft light 2 is placed in other parts of the aircraft 100.

Figure 9 shows an exterior aircraft light 2 in accordance with a further exemplary embodiment of the invention in a cross-sectional representation. The exterior aircraft light 2 of Figure 9 may be seen as a modification of the exterior aircraft light of Figure 8. The description of Figure 8 applies to Figure 9 as well, where appropriate.

Instead of the single through-hole 45 of the exterior aircraft light 2 in Figure 8, the exterior aircraft light 2 of the embodiment of Figure 9 contains several small through-holes 46 in a perforated part 50 of the support portion 4. In another alternative, the central part 40 of the support portion 4 may contain neither the single through-hole 45 nor the small through-holes 46, but a mesh-like structure (not shown explicitly). The elastic carrier 32 covers the perforated part 50 on the side of the light source chamber 16. The deformation sensor 47 is arranged adjacent to the elastic carrier 32 and attached thereto. The elastic carrier 32 may be portion of silicone, 1-2 mm thin, which comprises a piezo foil or a strain gauge as possible deformation sensors. One side of the deformation sensor 47 faces the elastic carrier 32, while the other side faces the perforated portion 50 in the central portion 40 of the support portion 4.

As the through-holes 46 in the perforated part 50 are small, the elastic carrier 32 and the deformation sensor 47 cannot move or protrude into them in any significant way. Therefore, in the embodiment of Figure 9, the elastic carrier 32 can only be deformed towards the light source chamber 16. Thus, only a pressure difference in which the pressure in the light source chamber 16 is lower than in the comparative chamber 12 leads to a deformation of the elastic carrier 32. If the pressure in the light source chamber 16 is higher than in the comparative chamber 12, the elastic carrier 32 will not be deformed when compared to a state in which the pressure in light source chamber 16 and comparative chamber 12 are the same / substantially the same. Even if the deformation sensor 47 is a kind of sensor that cannot differentiate the direction of deformation, the embodiment shown in Figure 9 allows to selectively detect a pressure loss in the light source chamber 16. In an alternative embodiment, in which the deformation sensor 47 and the elastic element 32 are arranged on the side of the perforated part 50 facing the comparative chamber 12, a pressure loss in the comparative chamber 12 can be detected selectively and differentiated from a pressure loss in the light source chamber 16.

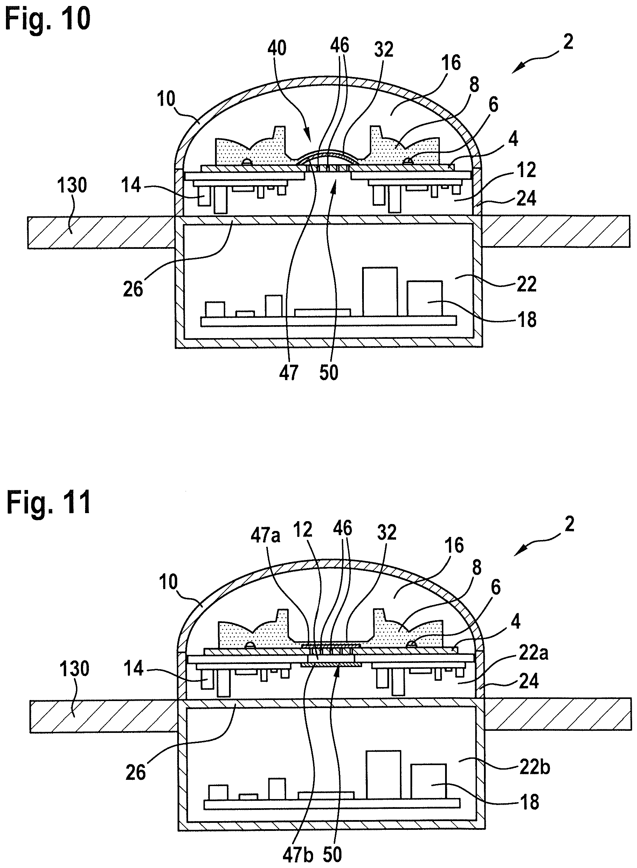

Figure 10 shows the exterior aircraft light 2 of Figure 9 in a cross-sectional representation in a state in which the pressure in the light source chamber 16 is lower than the pressure in the comparative chamber 12. As can be seen, the elastic carrier 32 is deformed towards the light source chamber 16. This causes the deformation sensor 47, which is attached to the elastic carrier or at least partially embedded therein, to be deformed towards the light source chamber 16 as well. If the pressure in the comparative chamber 12 is lower than the pressure in the light source chamber 16, however, the elastic carrier 32 and the deformation sensor 47 will not be deformed as the perforated part 50 of the support portion will keep them in place.

Figure 11 shows an exterior aircraft light 2 in accordance with a further exemplary embodiment of the invention in a cross-sectional representation. The exterior aircraft light 2 of Figure 11 may be seen as a modification of the exterior aircraft lights of Figures 8 and 9. The description of Figures 8 and 9 applies to Figure 11 as well, where appropriate.

Here, the exterior aircraft light 2 contains two deformation sensors 47, i.e., a first deformation sensor 47a and a second deformation sensor 47b. The first deformation sensor 47a is attached on one side to the elastic carrier 32. The other side of the first deformation sensor 47a is arranged to be situated adjacent to the perforated part 50 of the support portion 4 inside the light source chamber 16. The second deformation sensor 47b is spaced apart from the side of the perforated part 50 facing away from the light source chamber 16. In this case, the comparative chamber 12 is between the perforated part 50 and the second deformation sensor 47b.

The exterior aircraft light 2 of the embodiment of Figure 11 additionally comprises two further chambers 22, i.e., a first further chamber 22a and a second further chamber 22b. The side of the second deformation sensor 47b facing away from the comparative chamber 12 faces towards the first further chamber 22a. The first and the second further chambers 22a, 22b may each contain the control unit 14 and/or power electronics 18.

The first deformation sensor 47a can only be deformed towards the light source chamber 16. Thus, it can only detect a pressure difference between the light source chamber 16 and comparative chamber 12 if the pressure is lower in the light source chamber 16, e.g., due to a crack in the light transmissive cover 10. The second deformation sensor 47b can be deformed both towards the comparative chamber 12 and towards the first further chamber 22a. A pressure loss in the light source chamber 16 as well as a pressure loss in the first further chamber 22a could lead to a deformation of the second deformation sensor 47b, in opposite directions. If the second deformation sensor 47b - due to its design and/or mode of operation - cannot differentiate between the directions of deformation, the signals of the first and second deformation sensors 47a, 47b could be combined. If both deformation sensors 47a, 47b detect a deformation, this is interpreted as the deformation being towards the light transmissive cover 10, which means that the pressure in the light source chamber 16 is lower than in the first further chamber 22a. If only the second deformation sensor 47b detects a deformation, this is interpreted as the deformation being towards the first further chamber 22a, which means that the pressure in the first further chamber 22a is lower than the pressure in the light source chamber 16.

The invention has been described with reference to exemplary embodiments, it will be understood by those skilled in the art that various changes may be made without departing from the scope of the claims.

In addition, many modifications may be made to adapt a particular situation or material to the teachings of the invention without departing from the essential scope thereof. Therefore, it is intended that the invention not be limited to the particular embodiment disclosed, but that the invention will include all embodiments falling within the scope of the appended claims.

## Claims

1. Exterior aircraft light (2), comprising:
a light source chamber (16);
a comparative chamber (12);
a support portion (4), wherein the support portion (4) is interposed between the light source chamber (16) and the comparative chamber (12);
at least one light source (6), wherein the at least one light source (6) is arranged in the light source chamber (16);
at least one optical element (8), arranged over the at least one light source (6) for shaping an exterior aircraft light output;
a light transmissive cover (10), arranged over the at least one light source (6) and the at least one optical element (8) and closing the light source chamber (16);
an airtight, elastic carrier (32), separating the light source chamber (16) from the comparative chamber (12); and
a deformation sensor (47), which is arranged with the elastic carrier (32).

2. Exterior aircraft light (2) according to claim 1, wherein the elastic carrier (32) comprises an overmolded component, overmolded over the deformation sensor (47).

3. Exterior aircraft light (2) according to claim 1 or 2, wherein the elastic carrier (32) forms an integral part with the at least one optical element (8).

4. Exterior aircraft light (2) according to any of the preceding claims,
wherein the elastic carrier (32) is arranged over or in a through-hole (45) of the support portion (4), or
wherein the elastic carrier (32) is arranged over a mesh-like structure or over a perforated part (50) of the support portion (4).

5. Exterior aircraft light (2) according to any of the preceding claims, wherein the exterior aircraft light (2) comprises two deformation sensors (47), wherein the two deformation sensors (47) are arranged on opposite sides of the support portion (4), wherein the two deformation sensors (47) in particular cover a through-hole (45) or a mesh-like structure or a perforated part (50) of the support portion (4) from both sides.

6. Exterior aircraft light (2) according to any of the preceding claims, wherein the elastic carrier (32) comprises a portion of reduced thickness of the support portion (4).

7. Exterior aircraft light (2) according to any of the preceding claims, wherein the light source chamber (16) is hermetically sealed and wherein the comparative chamber (12) is hermetically sealed or is not hermetically sealed.

8. Exterior aircraft light (2) according to any of the preceding claims, wherein the support portion (4) comprises a PCB.

9. Exterior aircraft light (2) according to any of the preceding claims, wherein the deformation sensor (4) is a piezo foil or a strain gauge.

10. Exterior aircraft light (2) according to any of the preceding claims, wherein the comparative chamber (12) contains electronic circuitry, in particular electronic circuitry for supplying power to and/or for controlling the at least one light source.

11. Exterior aircraft light (2) according to any of the preceding claims, further comprising:
an evaluation unit coupled to the deformation sensor (47), wherein the evaluation unit is configured to determine a relative pressure between the light source chamber (16) and the comparative chamber (12) from sensor data provided by the deformation sensor (47).

12. Exterior aircraft light (2) according to any of the preceding claims, wherein the exterior aircraft light (2) comprises a further chamber (22), wherein the further chamber (22) in particular contains power electronics (18).

13. Exterior aircraft light (2) according to any of the preceding claims, wherein the at least one optical element (8) comprises or consists of silicone.

14. Aircraft (100), such as an airplane or a helicopter, comprising at least one exterior aircraft light (2) according to any of the preceding claims.

15. Method for checking the operation of an exterior aircraft light (2) according to any of claims 1 to 13 comprising the steps of:
- providing sensor data from the deformation sensor (47);
- determining a relative pressure between the light source chamber (16) and the comparative chamber (12) from the sensor data;
- deriving an indication of status of the integrity of the light source chamber (16) and/or the comparative chamber (12).

## Patentansprüche

1. Luftfahrzeugaußenleuchte (2), umfassend:
eine Lichtquellenkammer (16);
eine Vergleichskammer (12);
einen Trägerbereich (4), wobei der Trägerbereich (4) zwischen der Lichtquellenkammer (16) und der Vergleichskammer (12) angeordnet ist;
mindestens eine Lichtquelle (6), wobei die mindestens eine Lichtquelle (6) in der Lichtquellenkammer (16) angeordnet ist;
mindestens ein optisches Element (8), das über der mindestens einen Lichtquelle (6) angeordnet ist, um eine Lichtausgabe der Luftfahrzeugaußenleuchte zu formen;
eine lichtdurchlässige Abdeckung (10), die über der mindestens einen Lichtquelle (6) und dem mindestens einen optischen Element (8) angeordnet ist und die Lichtquellenkammer (16) schließt;
einen luftdichten, elastischen Träger (32), der die Lichtquellenkammer (16) von der Vergleichskammer (12) trennt; und
einen Verformungssensor (47), der mit dem elastischen Träger (32) angeordnet ist.

2. Luftfahrzeugaußenleuchte (2) nach Anspruch 1, wobei der elastische Träger (32) ein überspritztes Bauteil umfasst, das über den Verformungssensor (47) überspritzt ist.

3. Luftfahrzeugaußenleuchte (2) nach Anspruch 1 oder 2, wobei der elastische Träger (32) einstückig mit dem mindestens einen optischen Element (8) ausgebildet ist.

4. Luftfahrzeugaußenleuchte (2) nach einem der vorhergehenden Ansprüche,
wobei der elastische Träger (32) über oder in einem Durchgangsloch (45) des Trägerbereichs (4) angeordnet ist, oder
wobei der elastische Träger (32) über einer netzartigen Struktur oder über einem perforierten Teil (50) des Trägerbereichs (4) angeordnet ist.

5. Luftfahrzeugaußenleuchte (2) nach einem der vorhergehenden Ansprüche, wobei die Luftfahrzeugaußenleuchte (2) zwei Verformungssensoren (47) umfasst, wobei die zwei Verformungssensoren (47) auf gegenüberliegenden Seiten des Trägerbereichs (4) angeordnet sind, wobei die zwei Verformungssensoren (47) insbesondere ein Durchgangsloch (45) oder eine netzartige Struktur oder einen perforierten Teil (50) des Trägerbereichs (4) von beiden Seiten abdecken.

6. Luftfahrzeugaußenleuchte (2) nach einem der vorhergehenden Ansprüche, wobei der elastische Träger (32) einen Bereich mit verringerter Dicke des Trägerbereichs (4) umfasst.

7. Luftfahrzeugaußenleuchte (2) nach einem der vorhergehenden Ansprüche, wobei die Lichtquellenkammer (16) hermetisch abgedichtet ist und wobei die Vergleichskammer (12) hermetisch abgedichtet oder nicht hermetisch abgedichtet ist.

8. Luftfahrzeugaußenleuchte (2) nach einem der vorhergehenden Ansprüche, wobei der Trägerbereich (4) ein PCB umfasst.

9. Luftfahrzeugaußenleuchte (2) nach einem der vorhergehenden Ansprüche, wobei der Verformungssensor (4) eine Piezofolie oder ein Dehnungsmessstreifen ist.

10. Luftfahrzeugaußenleuchte (2) nach einem der vorhergehenden Ansprüche, wobei die Vergleichskammer (12) eine elektronische Schaltungsanordnung enthält, insbesondere eine elektronische Schaltungsanordnung zur Stromversorgung und/oder zur Steuerung der mindestens einen Lichtquelle.

11. Luftfahrzeugaußenleuchte (2) nach einem der vorhergehenden Ansprüche, ferner umfassend:
eine Auswerteeinheit, die mit dem Verformungssensor (47) gekoppelt ist, wobei die Auswerteeinheit dazu ausgebildet ist, aus von dem Verformungssensor (47) bereitgestellten Sensordaten einen relativen Druck zwischen der Lichtquellenkammer (16) und der Vergleichskammer (12) zu ermitteln.

12. Luftfahrzeugaußenleuchte (2) nach einem der vorhergehenden Ansprüche, wobei die Luftfahrzeugaußenleuchte (2) eine weitere Kammer (22) umfasst, wobei die weitere Kammer (22) insbesondere Leistungselektronik (18) enthält.

13. Luftfahrzeugaußenleuchte (2) nach einem der vorhergehenden Ansprüche, wobei das mindestens eine optische Element (8) Silikon umfasst oder aus Silikon besteht.

14. Luftfahrzeug (100), wie etwa ein Flugzeug oder ein Hubschrauber, umfassend mindestens eine Luftfahrzeugaußenleuchte (2) nach einem der vorhergehenden Ansprüche.

15. Verfahren zur Überprüfung des Betriebs einer Luftfahrzeugaußenleuchte (2) nach einem der Ansprüche 1 bis 13, umfassend die Schritte:
- Bereitstellen von Sensordaten von dem Verformungssensor (47);
- Ermitteln eines relativen Drucks zwischen der Lichtquellenkammer (16) und der Vergleichskammer (12) aus den Sensordaten;
- Ableiten einer Angabe eines Status der Integrität der Lichtquellenkammer (16) und/oder der Vergleichskammer (12).

## Revendications

1. Lumière extérieure d'aéronef (2), comprenant :
une chambre de source lumineuse (16) ;
une chambre comparative (12) ;
une partie de support (4), dans laquelle la partie de support (4) est interposée entre la chambre de la source lumineuse (16) et la chambre comparative (12) ;
au moins une source lumineuse (6), dans laquelle la au moins une source lumineuse (6) est disposée dans la chambre de la source lumineuse (16) ;
au moins un élément optique (8), disposé au-dessus de la au moins une source lumineuse (6) pour façonner un faisceau lumineux extérieur de l'aéronef ;
un couvercle transparent à la lumière (10), disposé sur la au moins une source lumineuse (6) et le au moins un élément optique (8) et fermant la chambre de la source lumineuse (16) ;
un support élastique étanche à l'air (32), séparant la chambre de la source lumineuse (16) de la chambre comparative (12) ; et
un capteur de déformation (47), qui est disposé avec le support élastique (32).

2. Lumière extérieure d'aéronef (2) selon la revendication 1, dans laquelle le support élastique (32) comprend un composant surmoulé, surmoulé sur le capteur de déformation (47).

3. Lumière extérieure d'aéronef (2) selon la revendication 1 ou 2, dans laquelle le support élastique (32) fait partie intégrante du au moins un élément optique (8).

4. Lumière extérieure d'aéronef (2) selon l'une quelconque des revendications précédentes,
dans laquelle le support élastique (32) est disposé au-dessus ou dans un trou traversant (45) de la partie de support (4), ou
dans laquelle le support élastique (32) est disposé sur une structure en forme de maille ou sur une partie perforée (50) de la partie de support (4).

5. Lumière extérieure d'aéronef (2) selon l'une quelconque des revendications précédentes, dans laquelle le feu extérieur d'aéronef (2) comprend deux capteurs de déformation (47), dans lesquels les deux capteurs de déformation (47) sont disposés de part et d'autre de la partie de support (4), dans lesquels les deux capteurs de déformation (47) recouvrent en particulier un trou traversant (45) ou une structure en forme de maille ou une partie perforée (50) de la partie de support (4) des deux côtés.

6. Lumière extérieure d'aéronef (2) selon l'une quelconque des revendications précédentes, dans laquelle le support élastique (32) comprend une partie d'épaisseur réduite de la partie de support (4).

7. Lumière extérieure d'aéronef (2) selon l'une quelconque des revendications précédentes, dans laquelle la chambre de la source lumineuse (16) est hermétiquement scellée et dans laquelle la chambre comparative (12) est hermétiquement scellée ou n'est pas hermétiquement scellée.

8. Lumière extérieure d'aéronef (2) selon l'une quelconque des revendications précédentes, dans laquelle la partie de support (4) comprend une carte à circuit imprimé.

9. Lumière extérieure d'aéronef (2) selon l'une quelconque des revendications précédentes, dans laquelle le capteur de déformation (4) est une feuille piézo ou une jauge de contrainte.

10. Lumière extérieure d'aéronef (2) selon l'une quelconque des revendications précédentes, dans laquelle la chambre comparative (12) contient des circuits électroniques, notamment des circuits électroniques pour alimenter et/ou contrôler la au moins une source lumineuse.

11. Lumière extérieure d'aéronef (2) selon l'une quelconque des revendications précédentes, comprenant en outre :
une unité d'évaluation couplée au capteur de déformation (47), dans laquelle l'unité d'évaluation est configurée pour déterminer une pression relative entre la chambre de la source lumineuse (16) et la chambre comparative (12) à partir des données du capteur fournies par le capteur de déformation (47).

12. Lumière extérieure d'aéronef (2) selon l'une quelconque des revendications précédentes, dans laquelle le feu extérieur d'aéronef (2) comprend une chambre supplémentaire (22), dans laquelle la chambre supplémentaire (22) contient notamment une électronique de puissance (18).

13. Lumière extérieure d'aéronef (2) selon l'une quelconque des revendications précédentes, dans laquelle le au moins un élément optique (8) comprend ou est composé de silicone.

14. Aéronef (100), tel qu'un avion ou un hélicoptère, comprenant au moins un feu extérieur d'aéronef (2) selon l'une quelconque des revendications précédentes.

15. Procédé de vérification du fonctionnement d'un feu extérieur d'aéronef (2) selon l'une quelconque des revendications 1 à 13 comprenant les étapes suivantes :
- la fourniture de données de capteur provenant du capteur de déformation (47) ;
- la détermination d'une pression relative entre la chambre de la source lumineuse (16) et la chambre comparative (12) à partir des données du capteur ;
- la déduction d'une indication de l'état d'intégrité de la chambre de la source lumineuse (16) et/ou de la chambre comparative (12).
